# EUROPEAN PATENT APPLICATION

(11) **EP 1 515 572 A2**
(43) Date of publication of application: **16.03.2005**
(21) Application number: 04077541.3
(22) Date of filing: 09.09.2004
(51) Int. Cl.: H04Q 7/32

(54) **Communication device and base station search method for use therein**

(30) Priority: 10.09.2003 JP 2003317616
(71) Applicant: NEC Corporation, Minato-ku, Tokyo 108-01 (JP)
(72) Inventor: Masaru, Hirata, c/o Nec Corporation, Minato-ku Tokyo (JP)
(74) Representative: Patentanwälte Wenzel & Kalkoff

(57) **Abstract**

An A/D conversion section (13) converts analog base band data from a radio section (12) into digital base band data. A despreading section (141) despreads the digital base band data to convert it into symbol data. An RSCP measuring section (142) converts the symbol data into power and measures an RSCP value. An RSCP threshold value judging section (143) compares the measured RSCP value with a preset RSCP threshold value and judges from a result of the comparison whether or not a base station is present. A frequency setting section (144) determines a next search frequency value according to a result of the judgment of the RSCP threshold value judging section. A synthesizer (122) of the radio section produces local data according to frequency data sent from the frequency setting section.

## Description

The invention relates to a communication device and a base station search method for use therein and, in particular, relates to a base station search method using different frequency bands, which is carried out in a W-CDMA (Wideband-Code Division Multiple Access) communication terminal.

In W-CDMA communication, a communication terminal searches for a base station located in a peripheral region when power is turned on. When the presence of the base station is confirmed as a result of the search, the communication terminal performs communication with the confirmed base station.

When, for example, a base station search is conducted over a bandwidth of 60MHz using a step width of 200KHz according to the standard of the FDD (Frequency Division Duplex) system of 3GPP (Third Generation Partnership Project), it is necessary to use as many as 300 frequency values for such a search.

In order to efficiently perform the base station search, there has been proposed a method wherein the base station search is conducted after estimating a frequency with high possibility to locate a base station on the basis of measurement of received power (measurement of electric field strength) (e.g. see JP-A-2003-60551).

In the foregoing conventional base station search method, when the base station search is conducted using, for example, 300 frequency values as described above, a problem has occured in that, since searching takes a long time the waiting time of a communication terminal becomes short, time up to communication with the base station is delayed, and so forth.

It is therefore an object of the invention to provide a communication device that can solve the foregoing problem and shorten time required for conducting a base station search over all frequency bands.

It is another object of the invention to provide a base station search method that is used in the foregoing communication device.

A communication device according to a first aspect of the invention conducts a search for a base station located in a peripheral region on the basis of a frequency and performs communication with the base station confirmed by the search. Frequency bands are set so as to differ per base station. The communication device comprises an RSCP (Received Signal Code Power) measuring section for measuring an RSCP value of a pilot channel from a base station, an RSCP threshold value judging section for comparing the RSCP value measured by the RSCP measuring section with a preset RSCP threshold value to judge whether the base station is present, and a frequency setting section, responsive to judgment of the RSCP threshold value judging section that the base station is present, for setting a next search frequency value to be used to search for a next base station. Particularly, the frequency setting section sets, as the next search frequency value, a frequency value defining a frequency band different from a frequency band to which belongs a frequency value used upon the judgment of the RSCP threshold value judging section that the base station is present.

A communication device according to a second aspect of the invention comprises an antenna for receiving a signal transmitted from a base station, a mixer for converting radio data received by the antenna into analog base band data, an A/D conversion section for converting the analog base band data into digital base band data, and a despreading section for despreading the digital base band data to convert it into symbol data. The communication device further comprises an RSCP (Received Signal Code Power) measuring section for measuring an RSCP value from the symbol data, an RSCP threshold value judging section for comparing the measured RSCP value with a preset RSCP threshold value to judge whether the base station is present, a frequency setting section for determining a next search frequency value according to a result of judgement of the RSCP threshold value judging section, and a synthesizer for producing local data according to frequency data set by the frequency setting section and feeding the produced local data to the mixer.

In the communication device according to the second aspect, the frequency setting section sets, as the next search frequency value, a frequency value defining a frequency band different from a frequency band to which belongs a frequency value used upon the judgment that the base station is present.

In the communication device according to either of the first and second aspects, responsive to the judgment that the base station is present, the frequency setting section sets a frequency value in the sum of a last frequency value and 5MHz as the next search frequency value.

In the communication device according to either of the first and second aspects, responsive to the judgment that the base station is not present, the frequency setting section sets a frequency value in the sum of a last frequency value and 200KHz as another next search frequency value.

According to a third aspect of the invention, there is provided a base station search method of a communication device that conducts a search for a base station on the basis of a frequency value and performs communication with the base station confirmed by the search. Frequency bands are set so as to differ per base station. The base station search method comprises the steps of measuring an RSCP (Received Signal Code Power) value of a pilot channel from a base station, comparing the measured RSCP value with a preset RSCP threshold value to judge whether the base station is present, and setting, responsive to judgment that the base station is present, a next search frequency value to be used to search for a next base station. Particularly, the next search frequency value setting step sets, as the next search frequency value, a frequency value defining a frequency band different from a frequency band to which belongs a frequency value used upon the judgment that the base station is present.

It is preferable that, responsive to the judgment that the base station is present, a frequency value in the sum of a last frequency value and 5MHz be set as the next search frequency value in the next search frequency value setting step. On the other hand, it is preferable that, responsive to judgment that the base station is not present, a frequency value in the sum of a last frequency value and 200KHz is set as another next search frequency value.

According to a fourth aspect of the invention, there is provided a program for causing a computer to execute a base station search method of a communication device that conducts a search for a base station on the basis of a frequency value and performs communication with the base station confirmed by the search. The program comprises the steps of measuring an RSCP (Received Signal Code Power) value of a pilot channel from a base station, comparing the measured RSCP value with a preset RSCP threshold value to judge whether the base station is present, and setting, responsive to judgment that the base station is present, a next search frequency value to be used to search for a next base station. Particularly, the next search frequency value setting step sets, as the next search frequency value, a frequency value defining a frequency band different from a frequency band to which belongs a frequency value used upon the judgment that the base station is present.
Fig. 1 is a block diagram showing a structure of a communication terminal according to a preferred embodiment of the invention;
Fig. 2 is a diagram showing a structure of a transmission channel of a base station according to the preferred embodiment ;
Fig. 3 is a diagram showing transmission frequencies of base stations according to the preferred embodiment of the invention; and
Fig. 4 is a flowchart showing operation of the communication terminal according to Fig. 1.

A preferred embodiment of the invention will be described hereinbelow with reference to the drawings.

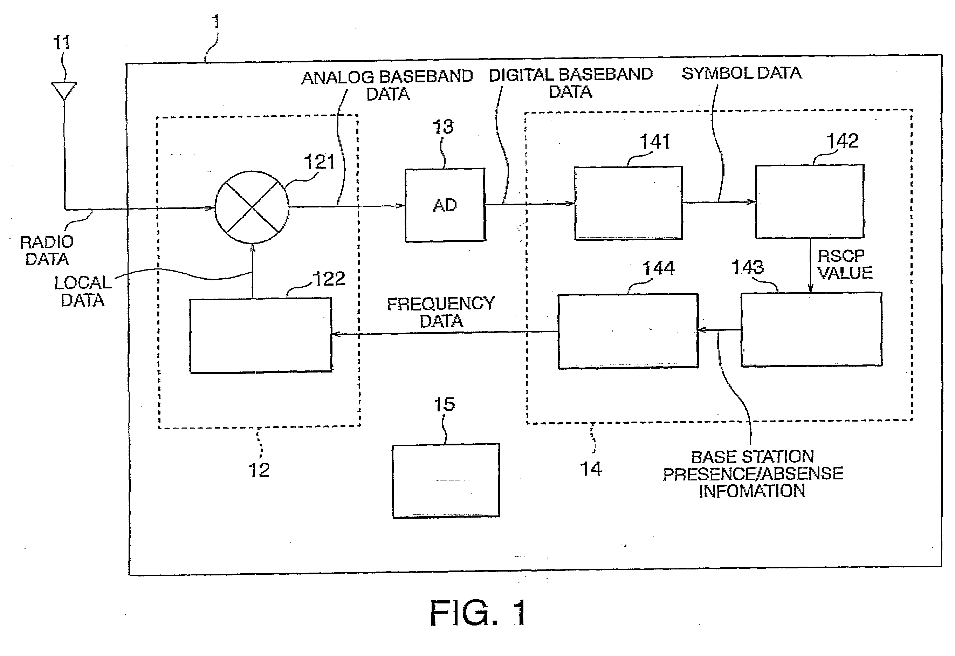

Fig. 1 shows the structure of a communication terminal (mobile station). A communication terminal 1 comprises an antenna 11, a radio section 12 connected to the antenna 11, an A/D (Analog/Digital) conversion section 13 connected to the radio section 12, and a digital processing section 14 connected to the A/D conversion section 13. The digital processing section 14 is realized by a microcomputer or a CPU, and Fig. 1 shows functional blocks thereof. The communication terminal 1 further has a recording medium 15 storing a program executable by the microcomputer or the CPU.

The radio section 12 comprises a mixer 121 connected to the antenna 11, and a synthesizer 122 that feeds local data to the mixer 121. The digital processing section 14 comprises a despreading section 141 connected to the A/D conversion section 13, an RSCP (Received Signal Code Power) measuring section 142 connected to the despreading section 141, an RSCP threshold value judging section 143 connected to the RSCP measuring section 142, and a frequency setting section 144 connected to the RSCP threshold value judging section 143.

The antenna 11 receives a signal transmitted from a base station (not shown) and inputs received radio data into the radio section 12. In the radio section 12, the mixer 121 converts the radio data from the antenna 11 and local data from the synthesizer 122 into analog base band data and outputs it. The A/D conversion section 13 converts the analog base band data from the radio section 12 into digital base band data.

In the digital processing section 14, the despreading section 141 despreads the digital base band data from the A/D conversion section 13 to convert it into symbol data. The RSCP measuring section 142 converts the symbol data from the despreading section 141 into power and measures an RSCP value. The RSCP threshold value judging section 143 compares the RSCP value measured by the RSCP measuring section 142 with a preset RSCP threshold value and judges the presence or absence of a base station from a result of the comparison. The RSCP threshold value judging section 143 outputs presence/absence information indicative of the presence or absence of the base station. The frequency setting section 144 determines a next frequency band by the use of the presence/absence information about the base station outputted from the RSCP threshold value judging section 143. The frequency setting section 144 outputs the determined frequency data. The synthesizer 122 of the radio section 12 produces local data according to the frequency data sent from the frequency setting section 144.

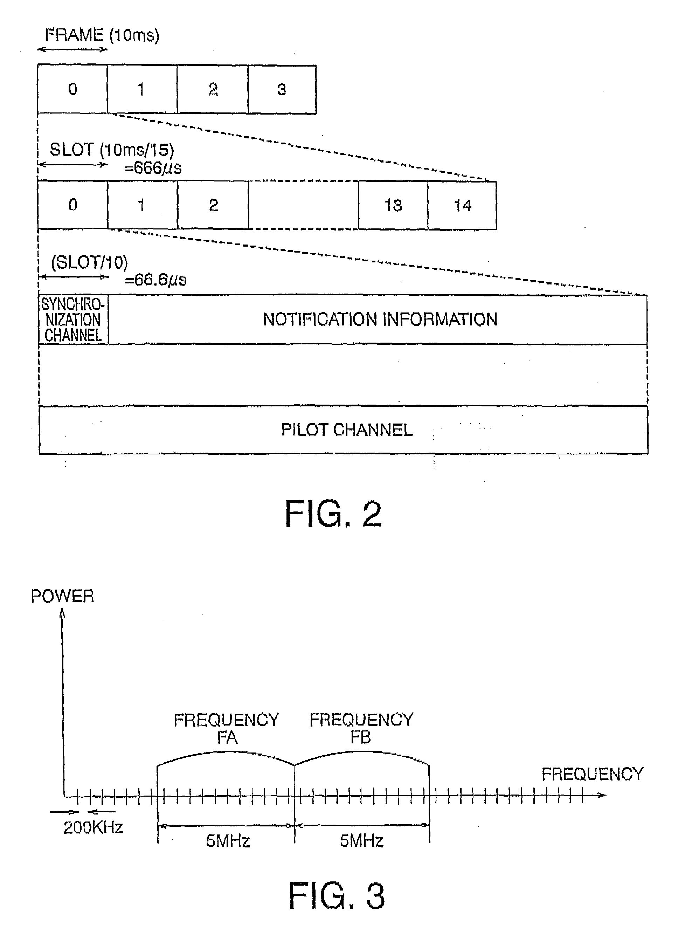

Referring to Fig. 2, the base station transmits, as a transmission channel, a synchronization channel and notification information that notifies base station information to the communication terminal 1, in a time-division manner. The base station further transmits, as a transmission channel, a pilot channel necessary for the communication terminal 1 to establish frame synchronization with the base station.

The communication terminal 1 establishes synchronization of slot timing by the use of the synchronization channel, and then establishes frame timing by the use of the synchronized slot timing and the pilot channel.

The transmission channel of the base station is formed on a frame unit basis. One frame has a period of 10ms and is formed by 15 slots. The synchronization channel and the notification information form one slot in a time-division manner, while the pilot channel alone forms one slot.

The communication terminal 1 calculates an RSCP value of the pilot channel by the use of the synchronized frame timing and compares the calculated RSCP value with the preset RSCP threshold value to judge the presence or absence of the base station. Specifically, when the calculated RSCP value is equal to or greater than the preset RSCP threshold value, the communication terminal 1 judges that the base station is present. Referring to Fig. 3, description will be made about the base station transmission power in the W-CDMA. communications according to the embodiment of the present invention.

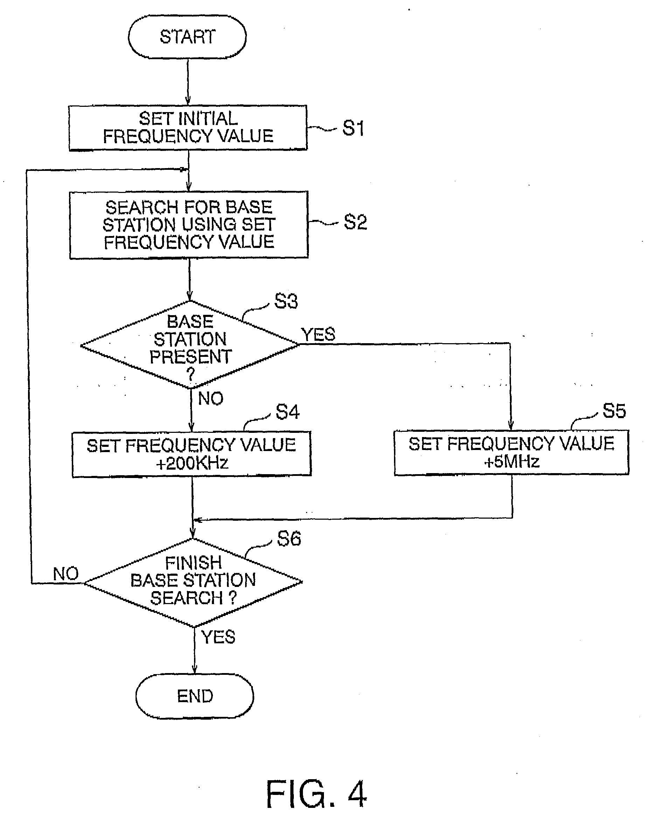

In W-CDMA communication, spreading is carried out by the use of a spreading code with a chip rate of, for example, 5MHz. Therefore, the power distribution of base station transmission at a frequency FA is spread over a frequency band of 5MHz as shown in Fig. 3. A frequency band of another base station cannot coexist in this 5MHz frequency band, and therefore, another base station uses, for example, a frequency FB of which a spread 5MHz frequency band differs from the spread 5MHz frequency band of the frequency FA as shown in Fig. 3. Referring to Figs. 1 to 4, description will be made about the operation of the communication terminal 1 according to the embodiment of the present invention. The processing shown in Fig. 4 is realized by the communication terminal 1 executing the program stored in the recording medium 15.

In Fig. 4, the communication terminal 1 sets an initial frequency value (step S1) . The initial frequency value is set to the lowest frequency among frequencies to be searched. The initial frequency value may be set to the highest frequency. For the sake of simplification, however, description will be given hereinbelow about the case where the initial frequency value is set to the lowest frequency.

The communication terminal 1 searches for a base station by the use of the set initial frequency value (step S2). In step S3, the communication terminal 1 calculates an RSCP value of a pilot channel and compares the calculated RSCP value with the preset RSCP threshold value to judge the presence or absence of the base station. When the base station is not present, the communication terminal 1 sets a frequency value of "initial frequency value + 200KHz" as a next search frequency value (another next search frequency value) (step S4) . In step S6, the communication terminal 1 judges whether to finish the base station search. This judgment is carried out by determining whether the next search frequency value exceeds the foregoing highest frequency value. If not finishing the base station search, the processing returns to step S2 where the communication terminal 1 searches for the base station using the next search frequency value. Then, if the base station is not present (step S3), the communication terminal 1 sets a frequency value of "last frequency value + 200KHz" as a next search frequency value. In this manner, while the base station is not present, the communication terminal 1 continues to search for the base station by the use of a frequency value of "last frequency value + 200KHz". That is, insofar as "YES" is not judged in step S6, the communication terminal 1 repeats execution of steps S2 to S6.

On the other hand, when step S3 judges that the base station is present, it is obvious that there are no other base stations present at a frequency value of "base station present frequency value + 200KHz". Therefore, the communication terminal 1 sets a frequency value of "last frequency value + 5MHz" as a next search frequency value (step S5). Specifically, the communication terminal 1 sets, as a next search frequency value, a frequency value defining a frequency band different from the frequency band to which belongs the frequency value used upon judgment in step S3 that the base station is present, particularly defining an adjacent frequency band. Then, the processing returns via step 86 to step S2 where the communication terminal 1 searches for another base station by the use of the frequency value of "last frequency value + 5MHz" . The reason of searching for another base station is to select a base station optimal for communication from among several base stations. That is, when several base stations are searched out, such a base station having the greatest RSCP value is selected from the searched base stations, and communication is performed with this base station.

When the set frequency value exceeds the highest frequency value, the communication terminal 1 finishes the base station search (step S6).

As described above, in this embodiment, when the presence of a base station is confirmed, a frequency value to be used for searching for the next base station is set to "last frequency value + 5MHz". This makes it possible to shorten a time required for performing the base station search over all the frequency bands.

## Claims

1. A communication device that conducts a search for a base station located in a peripheral region on the basis of frequencies and performs communication with the base station confirmed by the search, frequency bands being set so as to differ per base station, wherein said communication device comprises:
measuring section (142) for measuring a received signal code power value of a pilot channel from a base station;
judging section (143) for comparing the received signal code power value measured by said measuring section with a preset threshold value to judge whether the base station is present; and
frequency setting section (144), responsive to judgment of said judging section that the base station is present, for setting a next search frequency value to be used to search for a next base station,
said frequency setting section setting, as said next search frequency value, a frequency value defining a frequency band different from a frequency band to which belongs a frequency value used upon the judgment of said judging section that the base station is present.
frequency value and 5MHs as said next search frequency value.

2. A communication device comprising an antenna (11) for receiving a signal transmitted from a base station, a mixer (21) for converting radio data received by said antenna into analog base band data, conversion section (13) for converting said analog base band data into digital base band data, and despreading section (141) for despreading said digital base band data to convert it into symbol data, wherein said communication device further comprises:
measuring section (142) for measuring a received signal code power value from said symbol data;
judging section (143) for comparing the measured received signal code power value with a preset threshold value to judge whether the base station is present;
frequency setting section (144) for determining a next search frequency value according to a result of judgement of said judging section; and
a synthesizer (122) for producing local data according to frequency data set by said frequency setting section and feeding said produced local data to said mixer.

3. A communication device according to claim 2 wherein frequency bands are set so as to differ per base station, and said frequency setting section sets, as said next search frequency value, a frequency value defining a frequency band different from a frequency band to which belongs a frequency value used upon the judgment of said judging section that the base station is present.

4. A communication device according to claims 1 or 3 wherein, responsive to the judgment of said judging section that the base station is present, said frequency setting section sets a frequency value in the sum of a last frequency value and 5MHz as said next search frequency value.

5. A communication device according to any one of claims 1 to 4 7, wherein, responsive to the judgment of said judging section that the base station is not present, said frequency setting section sets a frequency value in the sum of a last frequency value and 200KHz as another next search frequency value.

6. A communication device according to any one of claims 1 to 5 wherein said communication device is a wideband-code division multiple access communication terminal.

7. A base station search method of a communication device that conducts a search for a base station on the basis of frequency values and performs communication with the base station confirmed by the search, frequency bands being set so as to differ per base station, wherein said base station search method comprises the steps of:
measuring (S2) a received signal code power value of a pilot channel from a base station;
comparing (S3) the measured received signal code value with a preset threshold value to judge whether the base station is present; and
setting (S5), responsive to judgment that the base station is present, a next search frequency value to be used to search for a next base station,
said next search frequency value setting step setting, as said next search frequency value, a frequency value defining a frequency band different from a frequency band to which belongs a frequency value used upon the judgment that the base station is present.

8. A base station search method according to claim 7 wherein, responsive to the judgment that the base station is present, said next search frequency value setting step sets a frequency value in the sum of a last frequency value and 5MHz as said next search frequency value.

9. A base station search method according to claim 7 or 8 , wherein said method further comprises the step of, responsive to judgment that the base station is not present, setting (S4) a frequency value in the sum of a last frequency value and 200KHz as another next search frequency value.

10. A base station search method according to any one of claims 7 to 9 wherein said base station search method is used in a wideband-code division multiple access communication terminal.
